# EUROPÄISCHE PATENTSCHRIFT

(11) **EP 1 510 503 B1**
(45) Veröffentlichungstag und Bekanntmachung des Hinweises auf die Patenterteilung: **13.02.2008**
(21) Anmeldenummer: 04014084.0
(22) Anmeldetag: 16.06.2004
(51) Int. Cl.: C02F 1/00

(54) **Wasserfiltervorrichtung und Filtereinsatz mit einer Nut**
Water filter treatment device and filter cartridge with a groove
Appareil de filtration d'eau et cartouche filtrante avec rainure

(30) Priorität: 27.08.2003 DE 10339779
(43) Veröffentlichungstag der Anmeldung: 02.03.2005
(73) Patentinhaber: Anna Distribution LP, Duluth, GA 30096 (US); Formaster S.A., 25-818 Kielce (PL)
(72) Erfinder: Bender, Stefan, Duluth, Georgia 30096 (US)
(74) Vertreter: Herden, Andreas F.

(56) Entgegenhaltungen:
- DE-U- 20 200 880
- US-A- 4 306 971
- US-B1- 6 405 875

## Beschreibung

### Gebiet der Erfindung

Die Erfindung betrifft eine Wasserfiltervorrichtung, insbesondere zum Filtern von Trinkwasser im Allgemeinen und eine Wasserfiltervorrichtung mit einem Einfülltrichter, einer Hülse und einem Filtereinsatz im Besonderen, sowie den für die Wasserfiltervorrichtung hergerichteten Filtereinsatz.

### Hintergrund der Erfindung

Derartige Wasserfiltervorrichtungen sind grundsätzlich bekannt. Sie werden zumeist im Haushalt zur Filterung bzw. Reinigung von Leitungswasser eingesetzt, insbesondere um die Wasserhärte zu reduzieren und/oder unerwünschte Wasserbestandteile zu entfernen.

Derart aufbereitetes Leitungswasser gilt als besonders geeignet, um z.B. besonders schmackhaften Tee zuzubereiten, es eignet sich aber auch für vielfältige andere Anwendungen.

Das zu filternde Wasser wird typischerweise in einen am oberen Ende einer Filterkanne befindlichen Einlauftrichter eingefüllt und fließt durch eine Filterkartusche mit einem darin befindlichen Filtermittel. Als Filtermittel werden z.B. Ionenaustauscher, Aktivkohle oder ähnliches verwendet.

Damit die Filterkartusche einfach handhabbar ist und das Filtermittel, welches typischerweise als Granulat in der Kartusche vorhanden ist, nicht aus dieser austreten kann, ist die Kartusche typischerweise allseitig geschlossen, wobei allerdings jeweils an einer Ober- und Unterseite der Kartusche Öffnungen zum Ein- bzw. Ausströmen des Wassers vorgesehen sind.

Demnach sind typischerweise der Boden und der Deckel der Kartusche jeweils als Sieb ausgebildet, wobei die Öffnungen derart bemessen sind, dass das Wasser hindurchströmen, nicht jedoch das Filtermittel austreten kann.

Maßgeblich für die erwünschte Filterwirkung ist die Zeitdauer, mit welcher das Wasser mit dem Filtermittel in Kontakt kommt, oder in anderen Worten, die Durchströmgeschwindigkeit des Wassers durch die Kartusche.

Es hat sich nun gezeigt, dass bei der Filterung des Wassers durch das Reinigungsmittel Gase entstehen können, in dem Wasser gelöste Gase wieder in die Gasphase austreten oder Gasblasen durch den Wasserfluss nach unten mitgenommen werden.

Diese oder auch andere Gase können sich an dem Siebboden sammeln und die Durchflussgeschwindigkeit des Wassers beeinflussen.

In diesem Zusammenhang ist aus dem Dokument EP 0 335 066 eine Wasserreinigungsvorrichtung mit einem Einlauftrichter bekannt, welche das Problem der Gasabführung vom unteren Bereich des Einsatzes und der Hülse zu lösen sucht.

In diesem Dokument wird vorgeschlagen, einen Luftsammelraum vorzusehen, welcher eine Teilfläche des Siebbodens einnimmt und zum Inneren des Einsatzes hin geschlossen ist. Es wird folglich versucht, die unerwünschten Gase an der Außenseite des Einsatzes abzuführen. Diese vorgeschlagene Trennung zwischen Sieböffnungen und Luftsammelraum mag wohl in Verbindung mit der besonderen sternförmigen Ausgestaltung des Siebbodens vorteilhaft erscheinen, lässt sich jedoch nur schwerlich auf andere Kartuschen übertragen.

Jedenfalls geht die Erfindung von der zunächst einleuchtend erscheinenden Annahme aus, dass das Gas von dem Sieböffnungen weg geführt und an der Außenseite des Einsatzes nach oben abgeführt werden soll.

Das in dem Dokument EP 0 335 066 vorgeschlagene Konzept weist jedoch eine Reihe von Nachteilen auf.

Zunächst ist die Form des Einsatzes kompliziert und daher kostenintensiv in der Herstellung.

Ferner erfordert die Form des Siebbodens eine bestimmte Ausgestaltung des Hülsenbodens, wodurch das Konzept höchst unflexibel ist.

Aber selbst der erwünschte Gasabtransport ist weiter verbesserungswürdig. Nachteilig ist nämlich der geringe Querschnitt, der für den Gasabtransport zur Verfügung steht.

Weiter besteht bei dieser Wasserreinigungsvorrichtung die Schwierigkeit, dass der Einsatz im Bereich des Siebdeckels dichtend in die Hülse eingesetzt ist. Somit kann das Gas, welches an der Außenseite des Einsatzes nach oben steigt, nicht ohne weiteres abgeführt werden. Eine in der Hülse vorgesehene Öffnung mag diesbezüglich Abhilfe schaffen, bedeutet jedoch eine weitere Verkomplizierung und damit Verteuerung der Vorrichtung.

Überdies beschränkt die Öffnung die maximale Füllhöhe und bei ungeschicktem Halten der Vorrichtung kann unerwünschterweise Wasser durch die Öffnung in den Zwischenraum zwischen dem Einsatz und der Hülse eintreten.

Demnach sind die bekannten Wasserreinigungsvorrichtungen in mehrfacher Hinsicht verbesserungswürdig.

In dem Dokument DE 202 00 880 U1 wird eine Vorrichtung zur Reinigung von Flüssigkeiten, insbesondere von Wasser, beschrieben, wobei ein rohrförmiger Fortsatz einer trichterähnlichen Haltevorrichtung einen Filtereinsatz aufweist, der einen Mantel mit zwei Kerben bzw. Nuten zur Führung des Filtereinsatzes aufweist. Der Filterboden des Filtereinsatzes weist an seiner Außenseite einen umlaufenden Steg auf, so dass eventuell aus dem Filtereinsatz austretende Luftblasen, zumindest nicht unmittelbar entlang des Mantels des Filtereinsatzes hochsteigen können, um auf diese Weise den Presssitz zumindest punktuell zu lösen, so dass randseitig nicht gefiltertes Wasser am Filtereinsatz vorbei geführt wird.

Allerdings kann auch diese Wasserreinigungsvorrichtung optimiert werden.

### Allgemeine Beschreibung der Erfindung

Der vorliegenden Erfindung liegt daher die Aufgabe zugrunde, eine Wasserfiltervorrichtung bereitzustellen, welche den Wasserausfluss aus dem Siebboden verbessert.

Es ist eine weitere Aufgabe der Erfindung, eine Wasserfiltervorrichtung bereitzustellen, bei welcher die Durchflussgeschwindigkeit des Wassers durch den Einsatz vorbestimmbar und reproduzierbar ist.

Noch eine weitere Aufgabe der Erfindung ist es, eine Wasserfiltervorrichtung und einen Einsatz bereitzustellen, welche die Nachteile bekannter Erfindungen meiden oder zumindest vermindern.

Noch eine Aufgabe der Erfindung ist es, eine einfach herstellbare, kostengünstige und kompatible Wasserfiltervorrichtung sowie einen entsprechenden Einsatz verfügbar zu machen.

Im Rahmen der vorliegenden Erfindung wurde überraschenderweise festgestellt, dass genau der entgegengesetzte Weg, als vom Stand der Technik beschritten, vorteilhafte Ergebnisse liefert.

Die Aufgabe der Erfindung wird in überraschend einfacher Weise bereits durch den Gegenstand der unabhängigen Ansprüche gelöst. Vorteilhafte Weiterbildungen der Erfindung sind in den Unteransprüchen definiert.

Erfindungsgemäß wird eine Wasserfiltervorrichtung, insbesondere zum Filtern von Trinkwasser mit einem Einfülltrichter und einer insbesondere mit dem Einfülltrichter dichtend verbundenen Hülse bereit gestellt. Die Hülse ist vorzugsweise mantelförmig, insbesondere im Wesentlichen zylindermantelförmig oder kegelstumpfmantelförmig und zum Aufnehmen oder Einsetzen des Einsatzes ausgebildet.

Die Wasserfiltervorrichtung weist ferner einen Einsatz oder Filtereinsatz auf, welcher eine im Wesentlichen mantelartige, vorzugsweise zylindermantelförmige oder kegelstumpfmantelförmige Seitenwandung, einen Siebdeckel und einen Siebboden aufweist, wodurch ein Innenraum gebildet ist. In den Einsatz oder dessen Innenraum ist ein vorzugsweise granulatartiges Filtermittel einführbar bzw. im Betrieb eingefüllt.

Folglich wird das zu filternde Wasser von oben in den Einfülltrichter eingefüllt, wird im eingesetzten Zustand des Einsatzes durch dessen Siebdeckel eingeleitet. Anschließend fließt es drucklos oder aufgrund der Schwerkraft durch den Filtereinsatz, um dabei von dem Filtermittel gefiltert zu werden und aus dem Siebboden wieder aus dem Einsatz heraus in einen Auffangbehälter oder eine Kanne auszutreten.

Eine Verbesserung gegenüber bekannten Wasserfiltervorrichtungen ergibt sich insbesondere dadurch, dass die Seitenwandung eine Nut aufweist, welche mittels zumindest einer Öffnung oder Gaseintrittsöffnung in der seitlichen Nut mit dem Innenraum des Einsatzes verbunden ist. Es können auch mehrere Nuten vorgesehen sein, welche insbesondere gegenüberliegend angeordnet sind.

Zwar ist die erfindungsgemäße Wasserfiltervorrichtung grundsätzlich bereits derart ausgebildet, dass eine Sammlung von Gas unter dem Einsatz weitgehend vermieden wird. Die Gase können nämlich insbesondere durch in dem Siebboden ohnehin für das Austreten des Wassers aus dem Einsatz vorgesehene Aussparungen oder Öffnungen in dem vorzugsweise horizontalen planaren Siebboden ins Innere des Einsatzes gelangen.

Diese Wirkung wird jedoch durch die Nut mit den Öffnungen weiter verbessert. Wenn unerwünschterweise trotz des nach oben offenen Siebbodens Gase oder Gasblasen an der Außenseite der Seitenwandung aufsteigen sollten, können diese durch die Öffnungen in der seitlichen Nut wieder ins Innere des Einsatzes gelangen.

Erfindungsgemäß können nämlich auftretende Gase zumindest teilweise anstatt an der Außenseite im Inneren des Einsatzes bzw. der Filterkartusche abgeführt werden.

Es mag dem Fachmann zunächst widersinnig erscheinen, die Gase wieder in den Innenraum zurück zu leiten, da bisher zumeist davon ausgegangen wurde, die Gase möglichst von dort fernzuhalten. Die Erfinder haben jedoch herausgefunden, dass sich dadurch der Vorteil ergibt, dass eine geringere Gasmenge zwischen dem Einsatz und der Hülse abgefördert werden muss, so dass eine Entlüftungsöffnung in der Hülse zumindest verkleinert, ggf. sogar auf diese verzichtet werden kann.

Ferner kann das ins Innere des Einsatzes zurück strömende Gas unter Umständen sogar eine vorteilhaften Auswirkung auf die Filterwirkung haben. Jedenfalls können erfindungsgemäß komplizierte Siebbodenformen mit aufwändigen Luftsammelräumen oder ähnlichem vermieden werden.

Dadurch ist eine vereinfachte und kostengünstige Ausgestaltung der Wasserfiltervorrichtung und des Einsatzes ermöglicht.

Ferner wird dadurch auch die Kompatibilität mit anderen Wasserfiltervorrichtungen erhöht, so dass eine gesteigerte Flexibilität und Attraktivität des Einsatzes erzielt wird.

Die Außenseite der Seitenwandung ist vorzugsweise einstückig und abschnittsweise radial nach innen eingeformt, um die Nut zu bilden, welche sich insbesondere vertikal in der Seitenwandung von dem Siebboden nach oben erstreckt. Die Öffnung ist bevorzugt an der tangentialen Stirnfläche der Nut angeordnet.

Ferner bevorzugt ist es, die Nut keilförmig auszubilden, wobei die radiale Tiefe der Nut nach oben abnimmt, so dass die Nut einen im Wesentlichen dreiecksförmigen radialen Querschnitt aufweist. Dies erhöht den Druck auf das Gas beim Einströmen durch die Öffnungen in der Nut.

Besonders vorteilhaft ist es die Nut mit mehreren Öffnungen bzw. Gaseintrittsöffnungen, z.B. 2, 3, 4, 5, 6 oder mehr Öffnungen zu versehen, so dass der Einströmquerschnitt vergrößert wird. Ferner kann die Wirkung dadurch verbessert werden, dass die Öffnungen in einer geraden Linie entlang der Längsachse der Nut angeordnet sind.

Es hat sich weiter gezeigt, dass es vorteilhaft sein kann, Öffnungen in der Nut im unteren Bereich, insbesondere in der unteren Hälfte der Nut anzuordnen.

Weiter bevorzugt ist es, Öffnungen bzw. Gaseintrittsöffnungen vorzusehen, welche in der Nut entlang einer Längsachse der Nut oder in vertikaler Richtung eine längliche Form aufweisen.

Die Einströmung kann weiter verbessert werden, wenn die Öffnungen bzw. Gaseintrittsöffnungen in der Nut eine schräg aufwärts und einwärts gerichtete Unterkante und/oder eine im Wesentlichen horizontale Oberkante aufweisen. Dadurch entsteht an der Oberkante eine Art Staustufe. Bei dieser Öffnungsform weisen Trennstege, durch welche die Öffnungen voneinander getrennt sind, einen im Wesentlichen sägezahnartigen Querschnitt auf.

Die Nut hat ferner noch eine weitere Funktion, nämlich eine fest definierte Winkelposition des Einsatzes in der Hülse zu erzielen. Dies wird dadurch erreicht, dass die Hülse an ihrer Innenseite zumindest eine, vorzugsweise keilförmige Feder aufweist, welche beim Einsetzen des Einsatzes in die Hülse in die Nut eingreift.

Gemäß einer Weiterbildung der Erfindung weist der Siebboden Aussparungen in Form von kreisringabschnittsförmigen, insbesondere konzentrisch angeordneten Öffnungen auf. Dadurch kann ein guter Kompromiss zwischen Öffnungsfläche und Stabilität des Siebbodens erzielt werden.

Alternativ hat es sich als vorteilhaft erwiesen, Aussparungen in dem Siebboden vorzusehen, welche von hutartigen Wandungen begrenzt sind, wobei die hutartigen Wandungen seitliche Öffnungen zum Austreten des Wassers aufweisen.

Um ein Austreten von Filtergranulat oder auch feinen abgebrochenen Filtergranulatstückchen durch die relativ großen Öffnungen in dem Siebboden zu vermeiden, wird bevorzugt an der Oberseite des Siebbodens ein Filtervlies angebracht, insbesondere befestigt.

Eine besonders vorteilhafte Kombinationswirkung wird ferner dadurch erzielt, dass im Aussenbereich des Siebbodens ein in Bezug auf den Siebboden erhabener oder sich in eingesetztem Zustand des Einsatz von dem Siebboden nach unten erstreckender Steg vorgesehen ist.

Der Steg weist bevorzugt einen wulstartigen Querschnitt auf und/oder ist rahmenartig vollständig umlaufend um den Siebboden einschließlich der Nut ausgebildet. Dadurch wird eine Art Überlaufrand gebildet und Gasblasen können effektiver durch den Siebboden ins Innere des Einsatzes geleitet werden.

Insbesondere durch diese kombinierte Wirkung dieses wulstartigen Steges zusammen mit den Entlüftungs- bzw. Gaseintrittsöffnungen in der Nut wird verhindert, dass sich eine unerwünscht große Menge an Gasen an der Außenseite des Einsatzes ansammeln kann bzw. an dieser aufsteigt.

Es liegt ferner im Rahmen der Erfindung die Einsätze oder Ersatzkartuschen separat bereitzustellen, da diese in regelmäßigen Abständen ausgetauscht werden sollten, so dass hierin ein erhebliches Marktpotential begründet liegt.

Im Folgenden wird die Erfindung anhand von Ausführungsbeispielen und unter Bezugnahme auf die Zeichnungen näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine schematische Schnittzeichnung einer Wasserfiltervorrichtung gemäß einer ersten Ausführungsform der Erfindung,
- Fig. 2: eine Wasserfiltervorrichtung gemäß einer zweiten Ausführungsform der Erfindung,
- Fig. 3: eine dreidimensionale Darstellung der Filterkartusche aus Fig. 1,
- Fig. 4: eine dreidimensionale Darstellung der Filterkartusche aus Fig. 2,
- Fig. 5: eine Filterkartusche gemäß einer dritten Ausführungsform der Erfindung,
- Fig. 6: eine schematische Schnittzeichnung durch den Boden der Filterkartusche aus Fig. 5,
- Fig. 7: eine schematische dreidimensionale Ausschnittsvergrößerung einer Aussparung in dem Siebboden der Filterkartusche aus Fig. 5 und
- Fig. 8: eine schematische Schnittzeichnung durch die Filterkartusche aus Fig. 5,
- Fig. 9: eine Ausschnittsvergrößerung der Nut der Filterkartusche aus Fig. 5.

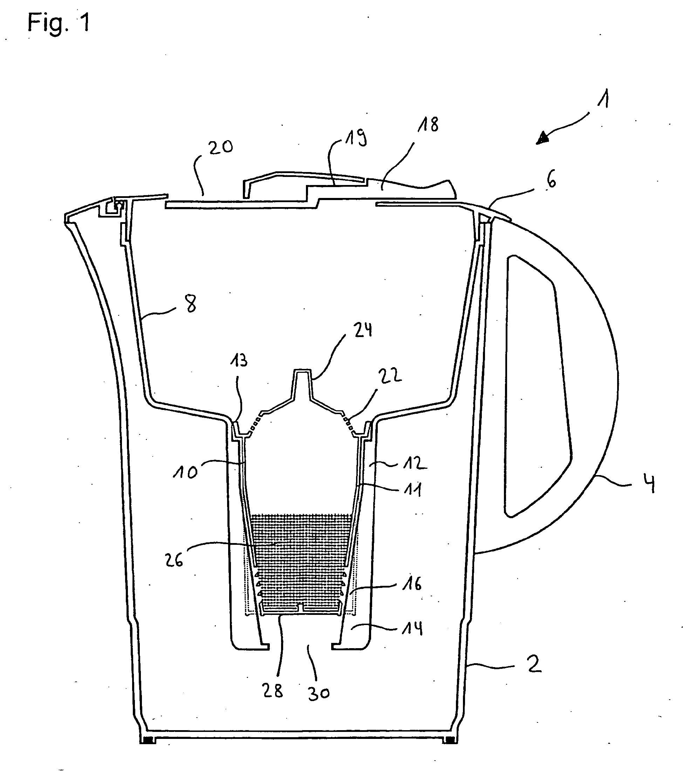

Fig. 1 zeigt die erfindungsgemäße Wasserfiltervorrichtung 1 gemäß einer ersten Ausführungsform der Erfindung, umfassend einen Auffangbehälter 2 mit einem Handgriff 4 und einem Deckel 6 sowie einem Einlauftrichter 8 mit einem Einsatz 10.

Der Einsatz oder die Filterkartusche 10 ist in eine mit dem Einlauftrichter 8 einstückig geformte Hülse 12 eingesetzt, wobei die Filterkartusche 10 im oberen Bereich mittels eines oberen Randes oder Dichtrandes 13 durch Klemmsitz mit der Hülse 12 im Wesentlichen dichtend verbunden ist.

Die Hülse 12 weist zwei nach innen ragende keilförmige Federn 14 auf, welche in jeweils eine Nut 16 in der Filterkartusche eingreifen, so dass die Filterkartusche 10 nur bestimmte Winkelpositionen einnehmen kann.

Der Deckel 6 weist ferner einen Schieber 18 auf, mit welchem eine Einfüllöffnung 20 freigegeben werden kann. Der Schieber 18 gibt in der geöffneten Position eine in der geschlossenen Position verdeckte Datumsangabe 19 zur Erinnerung an den nächsten Kartuschenwechsel frei.

Die Filterkartusche 10 ist im Wesentlichen zylindrisch, genauer leicht konisch ausgebildet und wird von einer mantelförmigen, genauer kegelstumpfoberflächenförmigen Seitenwandung 11, einem Siebdeckel 24 und einem Siebboden 28 begrenzt.

Wird Wasser durch die Öffnung 20 in den Einfülltrichter 8 eingefüllt, so kann dieses aufgrund der dichtenden Verbindung zwischen der Filterkartusche 10 und der Hülse 12 lediglich durch Öffnungen 22 in dem Siebdeckel 24 der Filterkartusche 10 nach unten entweichen. Das Wasser dringt folglich durch die Öffnungen 22 in das Innere der Filterkartusche 10 ein, worin es durch ein granulatartiges Filtermittel 26 gefiltert wird, um anschließend durch Öffnungen im Siebboden 28 der Filterkartusche 10 wieder aus dieser auszutreten und durch eine Öffnung 30 in der Hülse 12 in den Auffangbehälter 2 zu gelangen.

Auf diese Weise wird das Trinkwasser gefiltert.

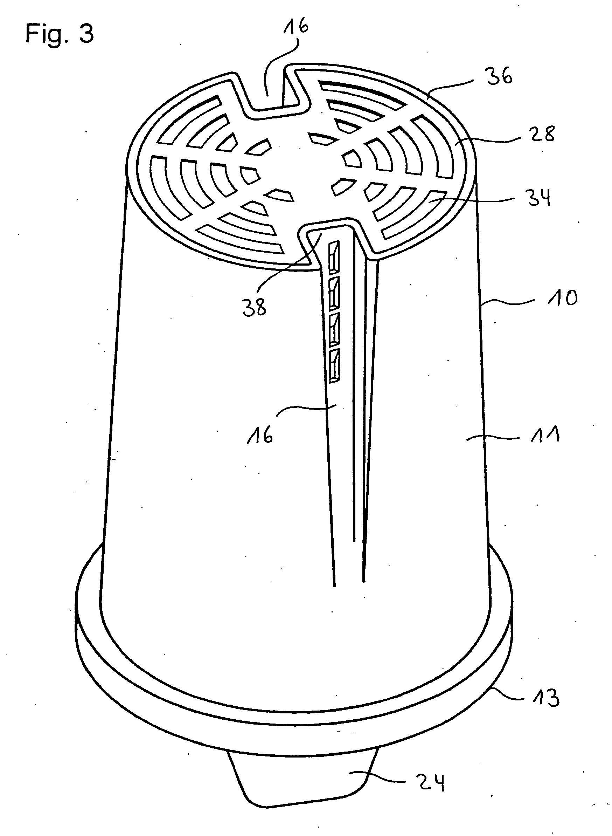

Die in Fig. 1 dargestellte Ausführungsform der Erfindung besitzt eine Filterkartusche mit zwei gegenüberliegenden Nuten 16, was am besten in Fig. 3 zu sehen ist.

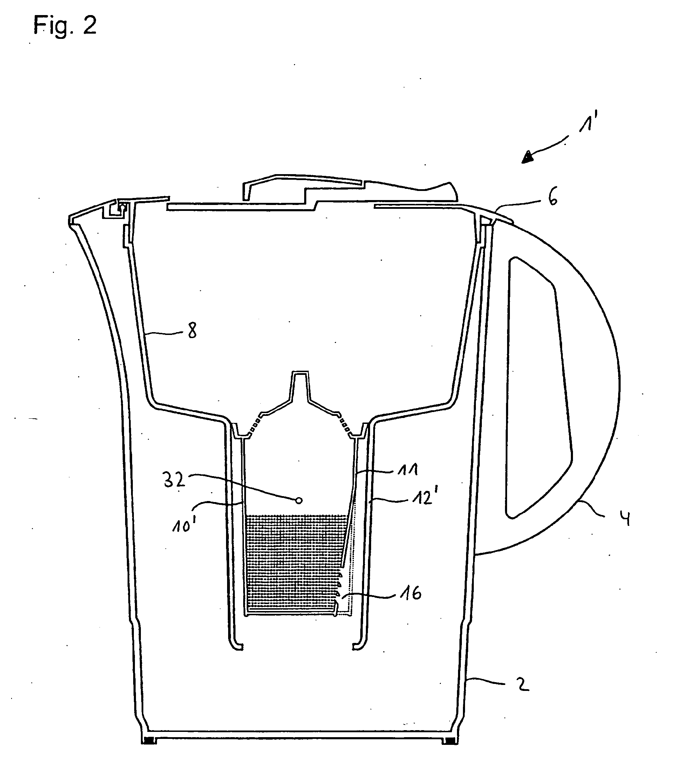

Bezug nehmend auf Fig. 2 ist eine alternative Ausführungsform der Wasserfiltervorrichtung 1' dargestellt, welche im Gegensatz zu derjenigen Ausführungsform in Fig. 1 eine Hülse 12' aufweist, welche keine Federn besitzt. Dadurch kann die Filterkartusche 10', welche in diesem Ausführungsbeispiel lediglich eine Nut 16 aufweist, in beliebigen Winkelpositionen eingesetzt werden. Die Filterkartusche 10' weist ferner eine seitliche Öffnung 32 auf.

Bezug nehmend auf Fig. 3 ist die Filterkartusche 10 aus Fig. 1 schräg von unten, also auf dem Kopf stehend, dargestellt. Der Siebboden 28 weist eine Mehrzahl von konzentrischen kreisbogenabschnittsförmigen Öffnungen 34 auf, durch welche in der in Fig. 1 dargestellten Betriebsposition das Wasser aus der Filterkartusche austreten kann. Der Siebboden wird begrenzt durch einen wulstartigen, insbesondere halbkreisquerschnittsförmigen erhabener Steg 36, welcher vollständig um den Siebboden umlaufend ausgebildet ist, begrenzt. Der Steg 36 kann auch als Überlaufrand 36 bezeichnet werden.

Weiter sind die beiden keilförmigen Nuten 16 der Filterkartusche 10 im Detail dargestellt. Die Nuten 16 besitzen einen im Wesentlichen dreiecksförmigen Querschnitt, so dass diese in Richtung des Siebdeckels 24 sich verjüngend auslaufen.

Der wulstartige Überlaufrand 36 begrenzt auch die Nuten 16 an ihrem in den Siebboden 28 übergehenden Ende 38, so dass im Betriebszustand verhindert wird, dass Gasblasen, welche sich unter dem Siebboden 28 ansammeln, in die Nuten 16 gelangen, um in diesen aufzusteigen.

Im Gegenteil sind die Gasblasen gezwungen, durch die Öffnungen 34 in dem Siebboden wieder ins Innere der Filterkartusche einzutreten. Dies ist auch dadurch bedingt, dass der Siebboden 28 im Wesentlichen vollständig horizontal verläuft.

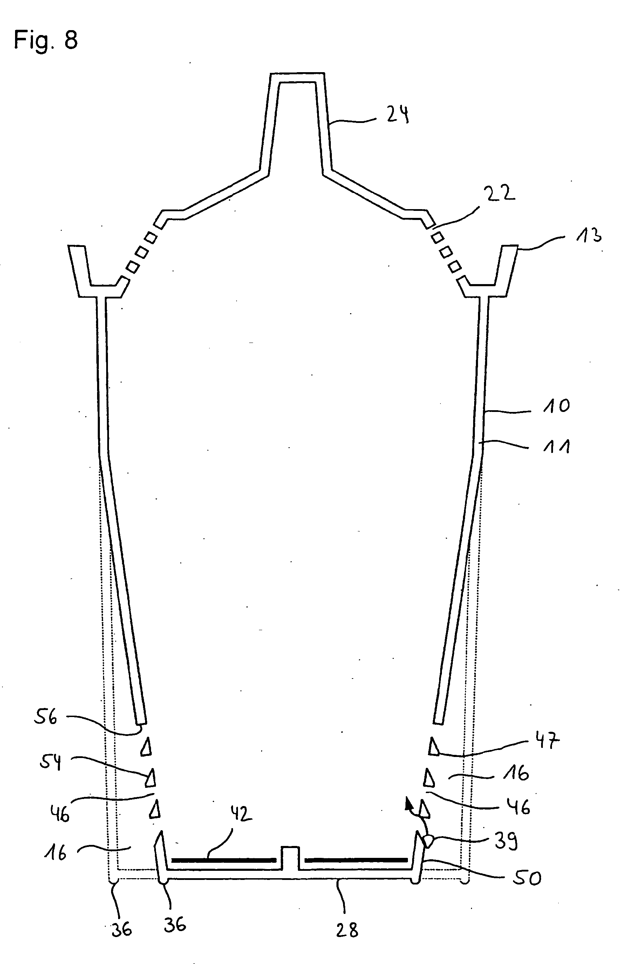

Sollte dennoch unerwünschterweise eine Gasblase 39 in die Nut 16 gelangen, kann diese durch Öffnungen bzw. Gaseintrittsöffnungen 46 wieder ins Innere der Filterkartusche 10 gelangen, wie am besten in Fig. 8 zu sehen ist.

Andernfalls würde sich wieder Bezug nehmend auf Fig. 1 das Gas unerwünschterweise unter dem Dichtrand 13 der Filterkartusche ansammeln. In vorteilhafter Weise kommt die Hülse 8 dadurch ohne Entlüftungsöffnung aus und der Filtervorgang verläuft reproduzierbar und gleichmäßig.

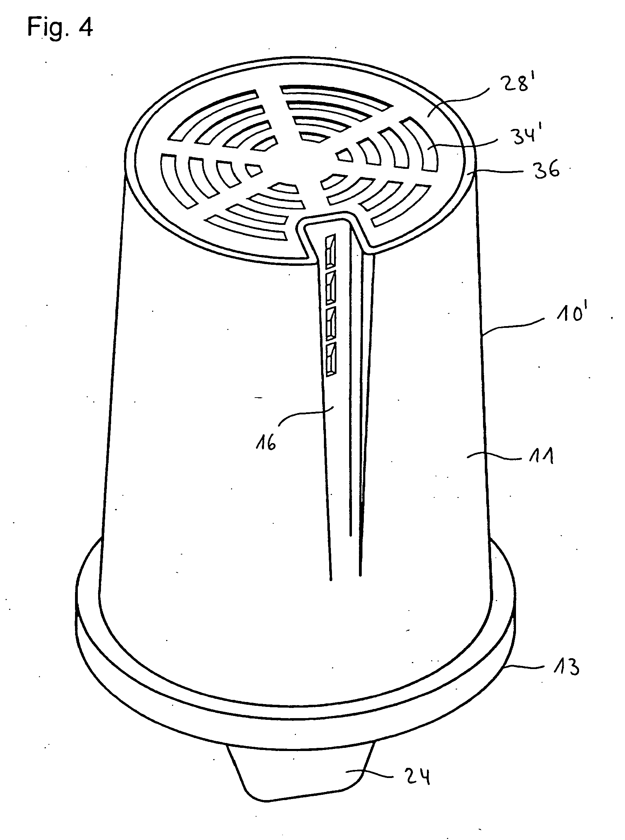

Bezug nehmend auf Fig. 4 ist die Filterkartusche 10' mit genau einer Nut 16 dargestellt. Weiter unterscheidet sich die Filterkartusche 10' durch geringfügig abgewandelte Öffnungen 34' in dem Siebboden 28'.

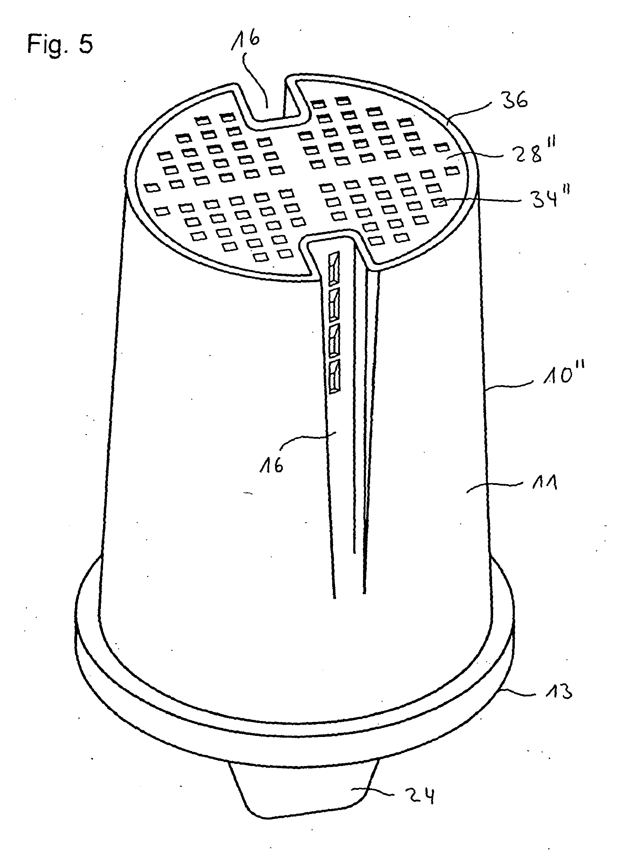

Bezug nehmend auf Fig. 5 ist eine dritte Ausführungsform der Filterkartusche 10" mit zwei sich gegenüberliegenden Nuten 16 analog der in Fig. 3 dargestellten Ausführungsform gezeigt. Die Filterkartusche 10' weist in ihrem Siebboden 28" eine Vielzahl von rechteckigen, genauer quadratischen Ausnehmungen 34'' auf.

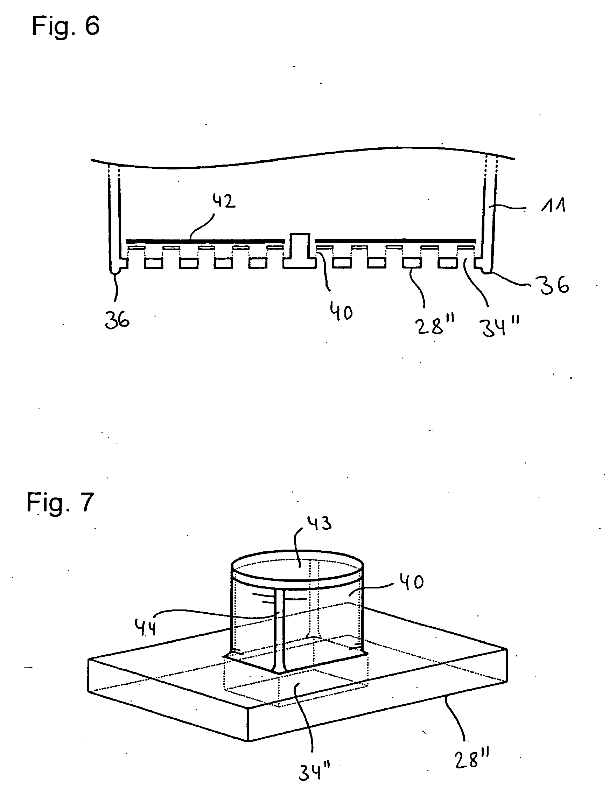

Bezug nehmend auf Fig. 6 ist der Siebboden 28'' im Detail dargestellt, um die Form der Ausnehmungen 34'' zu verdeutlichen.

Jede Ausnehmung 34'' wird in Richtung des Siebdeckels von hutartigen Wandungen 40 begrenzt.

Ferner liegt auf dem Siebboden ein Filtervlies 42 auf, welches verhindert, dass das Filtermittel 26 oder Bruchstücke hiervon aus der Filterkartusche austreten können.

Bezug nehmend auf Fig. 7 ist eine Aussparung 34'' mit den hutartigen Wandungen 40 im Detail dargestellt. Die im Bereich der Aussparung 34'' quadratische Form der hutartigen Wandungen läuft in Richtung des Siebdeckels in eine kreisrunde Form mit einem Deckel 43 über.

Ferner weisen die Wandungen 40 jeweils an den Ecken längliche Schlitze 44 auf, durch welche das Wasser austreten kann.

Bezug nehmend auf Fig. 8 ist die Filterkartusche 10 in einer schematischen Schnittzeichnung im Detail dargestellt. Insbesondere sind die in der seitlichen Nut 16 befindlichen Öffnungen oder Gaseintrittsöffnungen 46 zu sehen.

Durch den wulstartigen Überlaufrand 36 wird wirksam verhindert, dass Gas den Bereich unter dem Siebboden 28 verlassen kann. Somit gelangt in der Regel Gas durch den nach oben offenen Siebboden 28 wieder ins Innere der Filterkartusche 10.

Sollte unerwünschterweise dennoch einmal eine Luftblase 39 den Überlaufrand 36 überwinden, so steigt diese an der Innenwand 50 der Nut 16 langsam auf und gelangt durch die Öffnungen bzw. Gaseintrittsöffnungen 46 wieder ins Innere der Filterkartusche 10.

Diese Leitwirkung wird einerseits dadurch unterstützt, dass die Nut 16 sich in Richtung des Siebdeckels verjüngt, so dass aufgrund der Gravitation eine durch die Öffnungen 46 nach innen gerichtete Kraftkomponente auf die Luftblase 39 wirkt.

Der Effekt wird jedoch weiter durch die besondere Form der Öffnungen bzw. Gaseintrittsöffnungen 46 unterstützt. Die Öffnungen bzw. Gaseintrittsöffnungen 46 sind vertikal länglich ausgebildet und weisen eine schräge Unterkante 54 und eine in Bezug auf die Innenwand 50 der Nut 16 senkrechte Oberkante 56 auf. Dadurch entsteht eine zusätzliche Stauwirkung, welche die Glasblase 39 ins Innere der Filterkartusche 10 leitet.

Um ein besonders effektives Abführen der Gasblasen nach innen zu bewirken, sind in diesem Beispiel vier in einer Linie übereinander angeordnete Öffnungen 46 vorgesehen, so dass zwischen den Öffnungen Trennstege 47 vorhanden sind, welche aufgrund der Form der Unter- und Oberkanten 54, 56 einen sägezahnartige Querschnitt aufweisen.

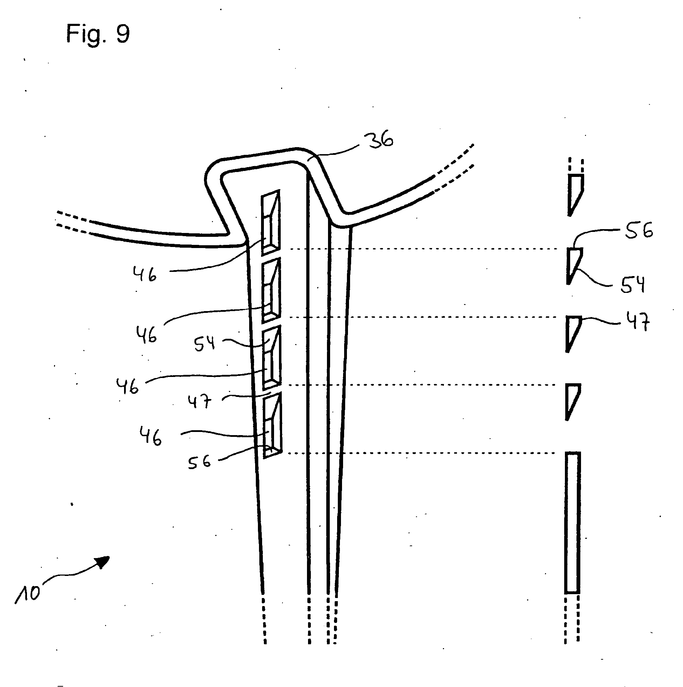

Fig. 9 zeigt nochmals die Ausgestaltung der Öffnungen 46 in der Nut 16 im Detail.

## Patentansprüche

1. Wasserfiltervorrichtung (1), insbesondere zum Filtern von Trinkwasser, umfassend
einen Einfülltrichter (8),
einen Einsatz (10), welcher eine im Wesentlichen mantelartige Seitenwandung, einen Siebdeckel (24) und einen Siebboden (28) aufweist und in welchen ein Filtermittel einführbar ist und
eine Hülse (12) zum Aufnehmen des Einsatzes (10) **dadurch gekennzeichnet, dass**
die Seitenwandung (11) eine Nut (16) aufweist, welche mittels zumindest einer Gaseintrittsöffnung (46) mit einem Innenraum des Einsatzes (10) verbunden ist.

2. Wasserfiltervorrichtung (1) nach Anspruch 1,
**dadurch gekennzeichnet, dass**
die Nut (16) einstückig zumindest mit der Seitenwandung (11) ausgebildet ist und sich im Wesentlichen vertikal in der Seitenwandung (11) von dem Siebboden (28) nach oben erstreckt.

3. Wasserfiltervorrichtung (1) nach einem der vorstehenden Ansprüche,
**dadurch gekennzeichnet, dass**
die Nut (16) im Wesentlichen keilförmig ausgebildet ist und die radiale Tiefe der Nut (16) nach oben abnimmt.

4. Wasserfiltervorrichtung (1) nach einem der vorstehenden Ansprüche,
**dadurch gekennzeichnet, dass**
die Nut (16) mehrere Gaseintrittsöffnungen (46) aufweist, mittels welcher die Nut mit dem Innenraum des Einsatzes (10) verbunden ist.

5. Wasserfiltervorrichtung (1) nach einem der vorstehenden Ansprüche,
**dadurch gekennzeichnet, dass**
die zumindest eine Gaseintrittsöffnung (46) bzw. die mehreren Gaseintrittdöffnungen (46) in der unteren Hälfte der Nut (16) angeordnet ist bzw. sind.

6. Wasserfiltervorrichtung (1) nach einem der vorstehenden Ansprüche,
**dadurch gekennzeichnet, dass**
die zumindest eine Gaseintrittsöffnung (46) bzw. die mehreren Gaseintrittsöffnungen (46) in der Nut (16) entlang einer Längsachse der Nut (16) eine längliche Form aufweist bzw. aufweisen.

7. Wasserfiltervorrichtung (1) nach einem der vorstehenden Ansprüche,
**dadurch gekennzeichnet, dass**
die zumindest eine Gaseintrittsöffnung(46) bzw. die mehreren Gaseintrittsöffnungen(46) in der Nut (16) eine schräg aufwärts und einwärts gerichtete Unterkante (54) und eine im Wesentlichen senkrecht zur Seitenwandung (11) verlaufende Oberkante (56) aufweisen.

8. Wasserfiltervorrichtung (1) nach einem der vorstehenden Ansprüche,
**dadurch gekennzeichnet, dass**
die mehreren Gaseintrittsöffnungen(46) in der Nut (16) in einer Linie übereinander angeordnet sind, wobei die Gaseintrittsöffnungen(46) durch Trennstege (47) voneinander getrennt sind und die Trennstege (47) einen im Wesentlichen sägezahnartigen Querschnitt aufweisen.

9. Wasserfiltervorrichtung (1) nach einem der vorstehenden Ansprüche,
**dadurch gekennzeichnet, dass**
die Seitenwandung (11) mehrere Nuten (16) aufweist.

10. Wasserfiltervorrichtung (1) nach einem der vorstehenden Ansprüche,
**dadurch gekennzeichnet, dass**
die Hülse (12) an ihrer Innenseite zumindest eine, vorzugsweise keilförmige Feder (14) aufweist, welche beim Einsetzen des Einsatzes (10) in die Hülse (12) in die Nut (16) eingreift.

11. Wasserfiltervorrichtung (1) nach einem der vorstehenden Ansprüche,
**dadurch gekennzeichnet, dass**
der Siebboden (28) im Wesentlichen planar ausgebildet ist.

12. Wasserfiltervorrichtung (1) nach einem der vorstehenden Ansprüche,
**dadurch gekennzeichnet, dass**
der Siebboden (28) im Wesentlichen horizontal angeordnet ist.

13. Wasserfiltervorrichtung (1) nach einem der vorstehenden Ansprüche,
**dadurch gekennzeichnet, dass**
der Siebboden (28) eine im Wesentlichen horizontal planare Bodenwandung aufweist in welcher Aussparungen (34) vorgesehen sind, durch welche das Wasser aus dem Einsatz austreten kann.

14. Wasserfiltervorrichtung (1) nach Anspruch 13,
**dadurch gekennzeichnet, dass**
die Aussparungen (34) in dem Siebboden (28) kreisringabschnittsförmige, konzentrisch angeordnete Öffnungen umfassen.

15. Wasserfiltervorrichtung (1) nach Anspruch 13 oder 14,
**dadurch gekennzeichnet, dass**
die Aussparungen (34) in dem Siebboden von hutartigen Wandungen (40) begrenzt sind und die hutartigen Wandungen seitliche Öffnungen (44) zum Austreten des Wassers aufweisen.

16. Wasserfiltervorrichtung (1) nach einem der vorstehenden Ansprüche,
**dadurch gekennzeichnet, dass**
an der Oberseite des Siebbodens (28) ein Filtervlies (42) angebracht ist.

17. Wasserfiltervorrichtung (1) nach einem der vorstehenden Ansprüche,
**dadurch gekennzeichnet, dass**
im Aussenbereich des Siebbodens (28) ein erhabener Überlaufrand (36) vorgesehen ist.

18. Wasserfiltervorrichtung (1) nach Anspruch 17
**dadurch gekennzeichnet, dass**
der Überlaufrand (36) einen wulstartigen Querschnitt aufweist und vollständig umlaufend um den Siebboden (28) einschließlich der Nut (16) ausgebildet ist.

19. Einsatz (10) für eine Wasserfiltervorrichtung (1) gemäß einem der vorstehenden Ansprüche, wobei der Einsatz (10) in die Hülse (12) einsetzbar ist und eine im Wesentlichen mantelartige Seitenwandung (11), einen Siebdeckel (24) und einen Siebboden (28) aufweist und in welchen ein Filtermittel (26) einführbar ist,
**dadurch gekennzeichnet, dass**
die Seitenwandung (11) eine Nut (16) aufweist, welche mittels zumindest einer Gaseintrittsöffnung (46) mit einem Innenraum des Einsatzes (10) verbunden ist.

## Claims

1. Water filter device (1), particularly for filtering drinking water, comprising
- a filling funnel (8),
- an insert (10) which comprises an essentially shell-like side wall, a sieve cover (24) and a sieve bottom (28) and into which filter means can be introduced, and
- a sleeve (12) for receiving the insert (10),
**characterised in that**
- the side wall (11) comprises a groove (16) which is connected by means of at least one gas inlet opening (46) to an inner area of the insert (10).

2. Water filter device (1) according to claim 1,
**characterised in that**
the groove (16) is formed integrally at least with the side wall (11) and extends essentially vertically in the side wall (11) from the sieve bottom (28) upwards.

3. Water filter device (1) according to one of the preceding claims,
**characterised in that**
the groove (16) is essentially wedge-shaped and the radial depth of the groove (16) decreases upwardly.

4. Water filter device (1) according to one of the preceding claims,
**characterised in that**
the groove (16) comprises a plurality of gas inlet openings (46), by means of which the groove is connected to the inner area of the insert (100).

5. Water filter device (1) according to one of the preceding claims,
**characterised in that**
the at least one gas inlet opening (46) or the plurality of gas inlet openings (46) is / are arranged in the lower half of the groove (16).

6. Water filter device (1) according to one of the preceding claims,
**characterised in that**
the at least one gas inlet opening (46) or the plurality of gas inlet openings (46) in the groove (16) has / have an elongated form along a longitudinal axis of the groove (16).

7. Water filter device (1) according to one of the preceding claims,
**characterised in that**
the at least one gas inlet opening (46) or the plurality of gas inlet openings (46) in the groove (16) has / have a lower edge (54) which is upwardly inclined and inwardly orientated and an upper edge (56) extending essentially perpendicularly to the side wall (11).

8. Water filter device (1) according to one of the preceding claims,
**characterised in that**
the plurality of gas inlet openings (46) in the groove (16) are arranged in a line one above the other, whereby the gas inlet openings (46) are separated from each other by separating webs (47) and the separating webs (47) have an essentially saw-tooth-like cross-section.

9. Water filter device (1) according to one of the preceding claims,
**characterised in that**
the side wall (11) comprises a plurality of grooves (16).

10. Water filter device (1) according to one of the preceding claims,
**characterised in that**
the sleeve (12) comprises on its inner side at least one, preferably wedge-shaped, tongue (14) which engages in the groove (16) when the insert (10) is inserted into the sleeve (12).

11. Water filter device (1) according to one of the preceding claims,
**characterised in that**
the sieve bottom (28) has an essentially planar formation.

12. Water filter device (1) according to one of the preceding claims,
**characterised in that**
the sieve bottom (28) is arranged essentially horizontally.

13. Water filter device (1) according to one of the preceding claims,
**characterised in that**
the sieve bottom (28) has an essentially horizontally planar bottom wall, in which recesses (34) are provided, through which the water can leave the insert.

14. Water filter device (1) according to claim 13,
**characterised in that**
the recesses (34) in the sieve bottom (28) comprise concentrically arranged openings which are in the shape of a section of a circle.

15. Water filter device (1) according to claim 13 or 14,
**characterised in that**
the recesses (34) in the sieve bottom are defined by cup-shaped walls (4) and the cup-shaped walls comprise lateral openings (44), through which the water leaves.

16. Water filter device (1) according to one of the preceding claims,
**characterised in that**
a filter pad (42) is arranged on the upper side of the sieve bottom (28).

17. Water filter device (1) according to one of the preceding claims,
**characterised in that**
a raised overflow edge (36) is provided in the outer region of the sieve bottom (28).

18. Water filter device (1) according to claim 17,
**characterised in that**
the overflow edge (36) has a bead-like cross-section and is formed so as to completely enclose the sieve bottom (28) including the groove (16).

19. Insert (10) for a water filter device (1) according to one of the preceding claims, whereby the insert (10) can be inserted into the sleeve (12) and comprises an essentially shell-like side wall (11), a sieve cover (24) and a sieve bottom (28) and into which filter means (26) can be introduced,
**characterised in that**
the side wall (11) comprises a groove (16) which is connected by means of at least one gas inlet opening (46) to an inner area of the insert (10).

## Revendications

1. Dispositif de filtration d'eau (1), en particulier pour la filtration d'eau potable, comprenant
un entonnoir de remplissage (8),
une cartouche (10), qui présente une paroi latérale sensiblement en forme d'enveloppe, un couvercle de tamis (24) et un fond de tamis (28) et dans laquelle un moyen de filtration peut être introduit et
un manchon (12) pour la réception de la cartouche (10),
**caractérisé en ce que**
la paroi latérale (11) présente une rainure (16) qui est reliée au moyen d'au moins une ouverture d'entrée de gaz (46) à un espace intérieur de la cartouche (10).

2. Dispositif de filtration d'eau (1) selon la revendication 1, **caractérisé en ce que**
la rainure (16) est réalisée d'une seule pièce au moins avec la paroi latérale (11) et s'étend sensiblement verticalement dans la paroi latérale (11) depuis le fond du tamis (28) vers le haut.

3. Dispositif de filtration d'eau (1) selon l'une quelconque des revendications précédentes,
**caractérisé en ce que**
la rainure (16) est réalisée sensiblement en forme de clavette et la profondeur radiale de la rainure (16) décroît vers le haut.

4. Dispositif de fixation d'eau (1) selon l'une quelconque des revendications précédentes,
**caractérisé en ce que**
la rainure (16) présente plusieurs ouvertures d'entrée de gaz (46), au moyen desquelles la rainure est reliée à l'espace intérieur de la cartouche (10).

5. Dispositif de filtration d'eau (1) selon l'une quelconque des revendications précédentes,
**caractérisé en ce que**
la au moins une ouverture d'entrée de gaz (46) ou les plusieurs ouvertures d'entrée de gaz (46) est ou sont reliées dans la moitié inférieure de la rainure (16).

6. Dispositif de filtration d'eau (1) selon l'une quelconque des revendications précédentes,
**caractérisé en ce que**
la au moins une ouverture d'entrée de gaz (46) ou les plusieurs ouvertures d'entrée de gaz (46) présente ou présentent une forme allongée dans la rainure (16) le long d'un axe longitudinal de la rainure (16).

7. Dispositif de filtration d'eau (1) selon l'une quelconque des revendications précédentes,
**caractérisé en ce que**
la au moins une ouverture d'entrée de gaz (46) ou les plusieurs ouvertures d'entrée de gaz (46) présente ou présentent dans la rainure (16) une arête inférieure (54) dirigée en biais vers le haut et vers l'intérieur et une arête supérieure (56) agencée sensiblement perpendiculairement à la paroi latérale (11).

8. Dispositif de filtration d'eau (1) selon l'une quelconque des revendications précédentes,
**caractérisé en ce que**
les plusieurs ouvertures d'entrée de gaz (46) sont disposées dans la rainure (16) les unes au-dessus des autres dans une ligne, les ouvertures d'entrée de gaz (46) étant séparées les unes des autres par des barrettes de séparation (47) et les barrettes de séparation (47) présentant une section sensiblement en forme de dents de scie.

9. Dispositif de filtration d'eau (1) selon l'une quelconque des revendications précédentes,
**caractérisé en ce que**
la paroi latérale (11) présente plusieurs rainures (16).

10. Dispositif de filtration d'eau (1) selon l'une quelconque des revendications précédentes,
**caractérisé en ce que**
le manchon (12) présente sur son côté intérieur au moins un ressort (14) de préférence en forme de clavette, qui s'engage dans le manchon (12) dans la rainure (16) lors d'une insertion de la cartouche (10).

11. Dispositif de filtration d'eau (1) selon l'une quelconque des revendications précédentes,
**caractérisé en ce que**
le fond du tamis (28) est conçu sensiblement plan.

12. Dispositif de filtration d'eau (1) selon l'une quelconque des revendications précédentes,
**caractérisé en ce que**
le fond du tamis (28) est disposé sensiblement horizontalement.

13. Dispositif de filtration d'eau (1) selon l'une quelconque des revendications précédentes,
**caractérisé en ce que**
le fond du tamis (28) présente une paroi de fond sensiblement horizontalement plan dans laquelle sont prévus des évidements (34) par lesquels l'eau peut sortir de la cartouche.

14. Dispositif de filtration d'eau (1) selon la revendication 13,
**caractérisé en ce que**
les évidements (34) comprennent dans le fond de tamis (28) des ouvertures en forme de segment circulaire disposées de façon concentrique.

15. Dispositif de filtration d'eau (1) selon la revendication 13 ou 14,
**caractérisé en ce que**
les évidements (34) sont délimités dans le fond de tamis par des parois (40) en forme de chapeau et les parois en forme de chapeau présentent des ouvertures (44) latérales pour la sortie de l'eau.

16. Dispositif de filtration d'eau (1) selon l'une quelconque des revendications précédentes,
**caractérisé en ce que**
un non-tissé filtrant (42) est placé sur le côté supérieur du fond du tamis (28).

17. Dispositif de filtration d'eau (1) selon l'une quelconque des revendications précédentes,
**caractérisé en ce que**
une bordure de débordement (36) surélevée est prévue dans la zone extérieure du fond de tamis (28).

18. Dispositif de filtration d'eau (1) selon la revendication 17,
**caractérisé en ce que**
la bordure de débordement (36) présente une section en forme de renflement et est conçue complètement à la périphérie autour du fond de tamis (28), y compris la rainure (16).

19. Cartouche (10) pour un dispositif de filtration d'eau (1) selon l'une quelconque des revendications précédentes, la cartouche (10) pouvant être insérée dans le manchon (12) et présentant une paroi latérale (11) sensiblement en forme d'enveloppe, un couvercle de tamis (24) et un fond de tamis (28) et dans laquelle un moyen de filtration (26) peut être introduit,
**caractérisée en ce que**
la paroi latérale (11) présente une rainure (16) qui est reliée au moyen d'au moins une ouverture d'entrée de gaz (46) à un espace intérieur de la cartouche (10).
